Europäisches Patentamt

European Patent Office

Office européen des brevets

(19)

(11) Veröffentlichungsnummer: **0 108 417**
**B1**

(12) **EUROPÄISCHE PATENTSCHRIFT**

(45) Veröffentlichungstag der Patentschrift :
09.08.89

(21) Anmeldenummer : 83111102.6

(22) Anmeldetag : 07.11.83

(51) Int. Cl.⁴ : **G 06 F 13/12**

(54) **Verfahren zum Steuern des Datentransfers zwischen einem Datensender und einem Datenempfänger über einen Bus mit Hilfe einer am Bus angeschlossenen Steuereinrichtung.**

(30) Priorität : 09.11.82 DE 3241359

(43) Veröffentlichungstag der Anmeldung :
16.05.84 Patentblatt 84/20

(45) Bekanntmachung des Hinweises auf die Patenterteilung : 09.08.89 Patentblatt 89/32

(84) Benannte Vertragsstaaten :
**AT DE FR GB IT**

(56) Entgegenhaltungen :
**US-A- 4 246 637**
**ELECTRONIC DESIGN, Band 27, Nr. 7, 29. März 1979, Seiten 102-106, Hayden Publishing Co., Rochelle Park, US; D. STAMM et al.: "Free the muC's CPU from I/O hassles with a special I/O processor"**
**Idem**
**WESCON TECHNICAL PAPER, Band 26, September 1982, Kapitel 20/4, Seiten 1-6, Western Periodicals Co., North Hollywood, US; T.W. CANTRELL: "The HD68450 - A versatile DMA controller for high performance system design"**
**Idem**
**AFIPS CONFERENCE PROCEEDINGS, NATIONAL COMPUTER CONFERENCE, Houston, Texas, 7.-10. Juni 1982, Seiten 55-57, AFIPS Press, Arlington, Virginia, US: "Synchronization primitives"**

(73) Patentinhaber : **Siemens Aktiengesellschaft Berlin und München**
**Wittelsbacherplatz 2**
**D-8000 München 2 (DE)**

(72) Erfinder : **Böning, Werner, Ing. grad.**
**Washingtonstrasse 17**
**D-8000 München 19 (DE)**

EP 0 108 417 B1

## Beschreibung

Die Erfindung bezieht sich auf ein Verfahren zum Steuern des Datentransfers zwischen einem Datensender und einem Datenempfänger über einen Bus mit Hilfe einer am Bus angeschlossenen Steuereinrichtung, die in Abhängigkeit eines Transferbefehle und Steuerbefehle enthaltenden Kanalprogramms den Datentransfer zwischen dem Datensender und dem Datenempfänger derart steuert, daß veranlaßt durch einen Transferbefehl in einem ersten Zyklus die Daten in einen Pufferspeicher der Steuereinrichtung und in einem zweiten Zyklus aus dem Pufferspeicher zum Datenempfänger übertragen werden und bei dem der zugeordnete Transferbefehl jeweils eine Moduscodierung für die Behandlung der Datensenderadresse und der Datenempfängeradresse enthält.

In Mikrocomputersystemen ist es oft erforderlich, Daten zwischen einem Datensender, z. B. einem Speicher, und einem Datenempfänger, z. B. einem peripheren Gerät, zu übertragen. Die Steuerung dieses Datentransfers zwischen dem Speicher und dem peripheren Gerät erfolgt durch den Mikroprozessor. Dazu sind der Mikroprozessor, der Speicher und die peripheren Geräte an einen Bus angeschlossen, in dem ein Adreßbus, ein Datenbus und ein Steuerbus zusammengefaßt sind. Die Steuerung des Datentransfers zwischen dem Datensender und dem Datenempfänger wird in Abhängigkeit eines Kanalprogramms, in dem Transferbefehle und Steuerbefehle enthalten sind, mit Hilfe einer am Bus angeschlossenen Steuereinrichtung durchgeführt.

Ein Kanalbefehl, mit dem ein Datentransfer durchgeführt wird, enthält gewöhnlich das kanalbefehlswort, welches die auszuführende Operation beschreibt und verschiedene Parameter, wie z. B. die Anzahl der zu übertragenden Bytes, der Adresse des Datensenders und die Adresse des Datenempfängers. Mehrere solche Kanalbefehle können durch sog. Befehlskettung zu einem Kanalprogramm verbunden werden. Neben den Kanalbefehlen, die den eigentlichen Datentransfer steuern, gibt es noch Steuerbefehle, durch die organisatorische Aufgaben erfüllt werden.

Um den Mikroprozessor von den Datentransfers zu entlasten, ist es bekannt, an den Bus eine sog. DMA Steuerung anzuschließen, die zum großen Teil selbstständig den Datentransfer zwischen dem Datensender und dem Datenempfänger steuert. Mikrocomputersysteme mit DMA Steuerung sind z. B. in « Elektronik Praxis » Nr. 9, Sept. 1982, S. 131-134 beschrieben.

Bei solchen DMA Steuerungen kann der Datentransfer in zwei Zyklen durchgeführt werden. In einem ersten Zyklus werden die Daten vom Datensender in einen Pufferspeicher der Steuereinrichtung übertragen, in einem zweiten Zyklus werden dann die Daten vom Pufferspeicher der Steuereinrichtung zum Datenempfänger übertragen. Durch die Zwischenspeicherung der Daten in der Steuereinrichtung, z. B. der DMA Steuerung, ist es möglich, die Daten in der Steuereinrichtung zu überprüfen und mit Vergleichsdaten zu vergleichen. Eine solche Steuerung, bei der der Datentransfer in zwei Zyklen abläuft, ist z. B aus « Electronic Design », Bd. 27, Nr. 7, Seiten 102-106 bekannt.

Der Datentransfer in zwei Zyklen ist aber dann ungünstig, wenn Daten aus dem Datensender lediglich in die Steuereinrichtung bzw. Daten aus der Steuereinrichtung lediglich in den Datenempfänger übertragen werden sollen. Solche Operationen treten sehr häufig auf. z. B. wenn das Gerätezustandsregister eines peripheren Gerätes gelesen werden soll oder ein Lesebefehl in ein Gerätebefehlsregister eingeschrieben werden soll usw. Bei derartigen Operationen wird ebenfalls ein Datentransfer durchgeführt, dieser Datentransfer dient jedoch Steuerzwecken. Zur Übertragung von Daten lediglich vom Datensender zur Steuereinrichtung bzw. von der Steuereinrichtung zum Datenempfänger können ebenfalls die oben angeführten Transferbefehle verwendet werden. Dann aber müßte beim Lesen eines Registers im Datenempfänger im Datensender eine Speicherzelle angegeben werden, obwohl das Datum lediglich in der Steuereinrichtung benötigt wird, der Datenempfänger keine Verwendung für das Datum hat.

Die der Erfindung zugrundeliegende Aufgabe besteht darin, ein Verfahren zum Steuern des Datentransfers zwischen einem Datensender und einem Datenempfänger über einen Bus mit Hilfe einer am Bus angeschlossenen Steuereinrichtung derart zu modifizieren, daß die für die Datenübertragung zwischen Datensender und Datenempfänger vorhandenen Transferbefehle auch für die Übertragung von Daten von Datensender zur Steuereinrichtung bzw. Steuereinrichtung zum Datenempfänger verwendet werden können, ohne daß der unnötige zweite Zyklus der Datenübertragung erforderlich ist. Diese Aufgabe wird bei einem Verfahren der eingangs angegebenen Art dadurch gelöst, daß zur Realisierung eines ausschließlichen Datentransfers vom Datensender zur Steuereinrichtung der Transferbefehl eine derartige Moduscodierung für die Datenempfängeradresse enthält, daß die Steuereinrichtung nur die Datenübertragung zwischen dem Datensender und dem Pufferspeicher der Steuereinrichtung veranlaßt.

Weiterhin wird die Aufgabe bei einem Verfahren der eingangs angegebenen Art dadurch gelöst, daß zur Realisierung eines ausschließlichen Datentransfers von der Steuereinrichtung zum Datenempfänger der Transferbefehl eine derartige Moduscodierung für die Datensenderadresse enthält, daß die Steuereinrichtung nur die Datenübertragung zwischen dem Pufferspeicher der Steuereinrichtung und dem Datenempfänger veranlaßt.

Wenn der Kanalbefehl einen Transferbefehl, die Datensenderadresse, die Datenempfängeradresse und die Anzahl der zu übertragenden Daten enthält, ist es zweckmäßig, die Datensenderadresse durch das zu übertragende Datum zu ersetzen, das dann zum Datenempfänger übertragen wird.

Vorteilhaft ist es, wenn die Steuereinrichtung eine DMA Steuerung ist, die einen durch einen Sequencer adressierten Mikroprogrammspeicher zur Aufnahme der den Kanalbefehlen zugeordneten Mikroprogramme, eine Adresseneinheit zur Aufnahme der Datenempfänger-und Datensenderadressen, eine Datenstufe mit dem Pufferspeicher, eine Steuerregisterstufe und einen Datenzähler enthält. Dann kann der Kanalbefehl in ein in der Steuerregisterstufe enthaltenes Kanalbefehlregister eingespeichert werden, das mit dem Sequencer verbunden ist, der ein dem Kanalbefehl zugeordnetes Mikroprogramm im Mikroprogrammspeicher adressiert. Durch die Mikrobefehle wird die Adresseneinheit derart gesteuert, daß diese die Adresse des zu übertragenden Datums im Datensender über den Bus zum Datensender schickt, der daraufhin das Datum zur Datenstufe und zwar in den Pufferspeicher überträgt. Entsprechend erfolgt auch die Übertragung der Daten von der Steuereinrichtung zum Datenempfänger.

Andere Weiterbildungen der Erfindung ergeben sich aus den Unteransprüchen.

Anhand eines Ausführungsbeispiels, das in den Figuren dargestellt ist, wird die Erfindung weiter erläutert. Es zeigen

Figur 1 ein Blockschaltbild eines Mikrocomputersystems,

Figur 2 den Aufbau der Steuereinrichtung als DMA Steuerung,

Figur 3 den Aufbau eines Kanalbefehls,

Figur 4 den Aufbau eines Kanalbefehls, wenn die Datenübertragung lediglich zwischen der Steuereinrichtung und einem Datenempfänger erfolgen soll.

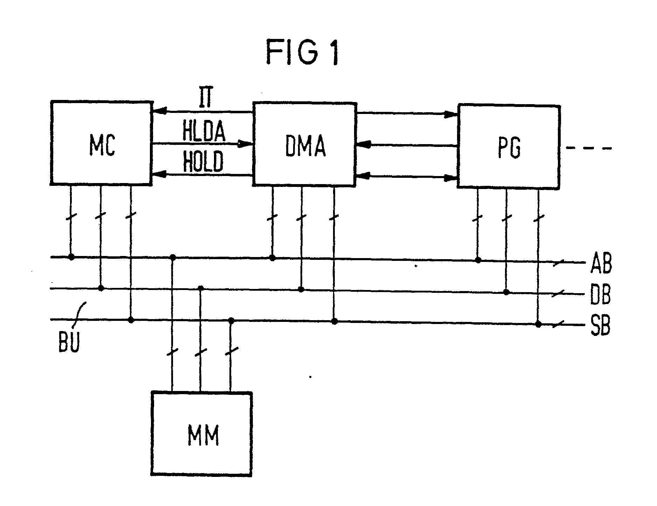

Das in Figur 1 dargestellte Mikrocomputersystem besteht aus einem Mikroprozessor MP, z. B. einem IAPX 80286 von Intel, einem peripheren Gerät PG, einem Speicher MM und einer Steuereinrichtung DMA. Diese Einheiten sind alle miteinander über einen Bus BU, in dem ein Adreßbus AB, ein Datenbus DB und ein Steuerbus SB zusammengefaßt sind, verbunden. Wenn ein Datentransfer zwischen dem Datensender, z. B. dem Speicher MM, und dem Datenempfänger, z. B. dem peripheren Gerät PG, durchgeführt werden soll, gibt der Mikroprozessor MC einen Kanal-Startbefehl an die Steuereinrichtung DMA ab. Anschließend übernimmt die Steuereinrichtung DMA die Steuerung des Datentransfers zwischen dem Speicher MM und dem peripheren Gerät PG, wobei die Bus-Zuteilung über die HOLD/ HLDA-Sequens vom MC gesteuert wird. Der Mikroprozessor MC ist damit vom Datentransfer entlastet und· kann andere Aufgaben ausführen. Wenn der Datentransfer zwischen dem Datensender und dem Datenempfänger beendet ist, gibt die Steuereinrichtung DMA eine Unterbrechungsanforderung IT an den Mikroprozessor MC ab und informiert diesen von der Beendigung des Datentransfers.

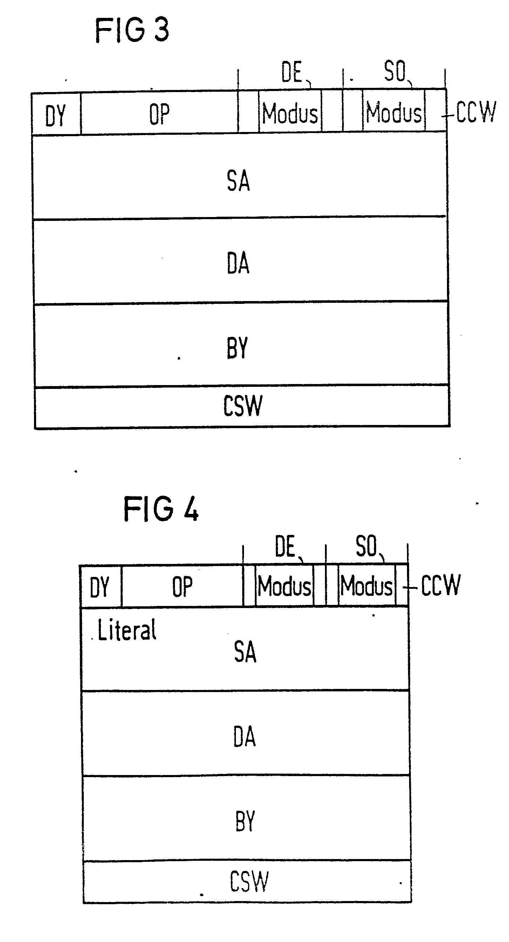

Der Datentransfer vom Datensender zum Datenempfänger erfolgt in Abhängigkeit eines Kanalprogramms, der Transferbefehle zur Steuerung des Datentransfers und Steuerbefehle zur Ausführung von organisatorischen Operationen enthält. Die Kanalprogramme sind z. B. im Speicher MM gespeichert und werden vom Mikroprozessor MC dort hinterlegt. Der Aufbau eines derartigen Kanalbefehls zeigt Figur 3. Der Kanalbefehl besteht aus dem Kanalbefehlswort CCW, der Datensenderadresse SA, der Datenempfängeradresse DA, der Anzahl der zu übertragenden Bytes BY und dem Kanalstatuswort CSW. Das Kanalbefehlswort CCW enthält verschiedene Bestandteile. Im ersten Bestandteil DY ist angegeben, ob ein Transferbefehl oder ein Steuerbefehl ausgeführt wird. In einem zweiten Bestandteil wird der Operationscode OP angegeben, in einem dritten Bestandteil DE sind Angaben enthalten, wie die Datenempfängeradresse zu modifizieren ist (Modus), ob jeweils ein Byte oder ein Datenwort übertragen wird und in welcher Richtung die Datenübertragung erfolgen soll. Der Bestandteil SO gibt an, wie die Datensenderadresse zu modifizieren ist, ob jeweils Bytes oder Datenworte zu übertragen sind und welche Richtung die Datenübertragung nimmt.

Mit Hilfe des Kanalbefehls kann somit die Steuereinrichtung feststellen, ob ein Transferbefehl durchgeführt werden soll und wenn ja, welche Adresse der Datensender hat und welche Adresse der Datenempfänger . hat. Außerdem kann die Steuereinrichtung die Anzahl der zu übertragenden Bytes feststellen, ob jeweils ein Wort oder ein Byte zu übertragen ist und ob die Datenübertragung vom Speicher zum peripheren Gerät oder vom peripheren Gerät zum Speicher erfolgen soll. Mit Hilfe der Modusinformation kann die Steuereinrichtung feststellen, ob die Adresse des Datenempfängers bzw. Datensenders nach Ausführung des Transfers unverändert bleibt oder inkrementiert oder dekrementiert werden muß.

Wie bereits oben beschrieben worden ist, erfolgt der Datentransfer zwischen dem Datensender und dem Datenempfänger in zwei Zyklen. Im ersten Zyklus werden die Daten vom Datensender ineinen Pufferspeicher der Steuereinrichtung DMA übertragen, im zweiten Zyklus werden die Daten vom Pufferspeicher der Steuereinrichtung DMA zum Datenempfänger übertragen. Soll jedoch nur eine Datenübertragung zwischen dem Datensender und der Steuereinrichtung erfolgen, dann kann der zweite Zyklus wegfallen. Um dies zu erreichen, wird der Kanalbefehl verändert. Der Modusteil des Bestandteils DE des Kanalbefehlswortes wird mit einer bestimmten Codierung versehen, z. B. 11, während der Modusteil des Bestandteils SO des Kanalbefehlswortes seine normale Bedeutung behält. Im Kanalbefehl wird weiterhin die Adresse SA des Datesenders angegeben, während die Adresse DA des Datenempfängers keine Bedeutung mehr hat und weggelassen werden kann. Wenn der Bestandteil DE des Kanalbefehlswortes CCW die angegebene Codierung hat, dann führt die Steuereinrichtung DMA nur den ersten Zyklus des Datentransfers durch, unterdrückt dagegen den zweiten Zyklus. Die Steuereinrichtung DMA kann dann das im Pufferspeicher enthaltene Datum überprüfen und auswerten.

Soll dagegen nur eine Datenübertragung zwischen der Steuereinrichtung DMA und dem Datenempfänger erfolgen, dann wird der Kanalbefehl entsprechend Figur 4 geändert. Nun erhält der Bestandteil SO des Kanalbefehlswortes CCW die angegebene Moduscodierung, während der Bestandteil DE die übliche Form beibehält. Weiterhin ist im Kanalbefehl die Adresse DA des Datenempfängers angegeben, während die Adresse SA des Datensenders durch ein wählbares Datenwort ersetzt wird. Dieses Datenwort wird dann von der Steuereinrichtung DMA zum Datenempfänger übertragen. Auch hier wird die Datenübertragung nur in einem Zyklus durchgeführt, der andere Zyklus wird unterdrückt.

Wenn mit Hilfe eines Kanalbefehls nur ein Datum übertragen werden soll, dann kann der Inhalt des Kanalbefehlsteils BY auf 1 gesetzt werden oder ganz weggelassen werden. Es ist jedoch auch möglich, mehrmals einen derart modifizierten Datentransfer in einem Zyklus durchzuführen, dann muß der Inhalt des Bestandteils BY des Kanalbefehls einen entsprechenden Wert haben. Damit ist es z. B. möglich, auf einem peripheren Datenträger, z. B. einem Magnetband, eine bestimmte Anzahl von Bytes zu löschen oder mit einem bestimmten Byte/Wortmuster zu überschreiben. In diesem Falle müßte der Bestandteil SO des Kanalbefehlswortes . CCW die Moduscodierung 11 haben. Das zu übertragende Muster wäre im Bestandteil SA des Befehlswortes anzugeben. Entsprechend ist es möglich, auf einem peripheren Datenträger, z. B. einem Magnetband, einen Datenblock bestimmter Länge zu überspringen. Dazu müßte der Bestandteil BY des Kanalbefehls einen entsprechenden Wert enthalten und der Bestandteil DE des Kanalbefehlswortes CCW die Moduscodierung 11 haben. Die Adresse des Magnetbandes wäre als Adresse SA des Datensenders anzugeben.

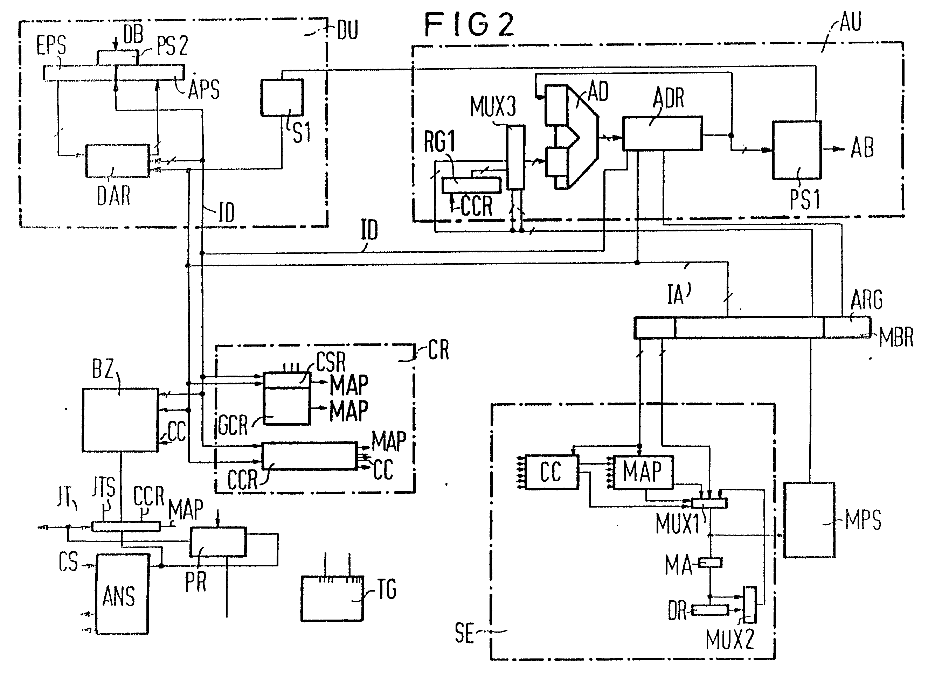

Aus Figur 2 ergibt sich der Aufbau einer Steuereinrichtung, die als DMA Steuerung realisiert ist. Die DMA Steuerung enthält einen Sequencer SE bekannten Aufbaus (vgl. oben angegebene Literaturstelle) aus einem Bedingungsmultiplexer CC, einem Befehlsdecoder MAP, einem ersten Multiplexer MUX1, einem Mikrobefehlsadressregister MA, einem Befehlsaddierer AD1 und einem zweiten Multiplexer MUX2. An den Sequencer-SE ist ein Mikroprogrammspeicher MPS angeschlossen, in dem die den Kanalbefehlen zugeordneten Mikroprogramme gespeichert sind. Wenn ein Kanalbefehl ausgeführt werden soll, dann wird durch den Befehlsdecoder MAP das im Mikroprogrammspeicher MPS zugeordnete Mikroprogramm adressiert und vom Mikroprogrammspeicher MPS die entsprechenden Mikrobefehle abgegeben. Diese Mikrobefehle werden in ein Mikrobefehlsregister MBR eingespeichert, von dem dann die Steuersignale zu den übrigen Einheiten der Steuereinrichtung abgegeben werden. Das Zusammenwirken von Sequencer SE, Mikroprogrammspeicher MPS und Mikrobefehlsregister MBR ist bekannt und kann z. B. der oben angegebenen Literaturstelle entnommen werden.

Das Mikrobefehlsregister MBR ist direkt oder über einen internen Adreß- und Steuerbus IA mit einer Adresseneinheit AU verbunden, in dem die Adresse des auszuführenden Kanalbefehls eingespeichert ist, und in dem die Adresse des Kanalbefehls entsprechend den Angaben im Kanalbefehlswort CCW modifiziert wird. Dazu enthält die Adresseneinheit AU ein Adressenregister ADR zur Aufnahme der Adresse des Kanalbefehls, einen Addierer AD zur Berechnung der neuen Adresse des Kanalbefehls und einen Pufferspeicher PS1 zur Zwischenspeicherung der Adresse, bevor diese auf den Adreßbus AB gegeben wird. Zur Berechnung der neuen Adresse des Kanalbefehlswortes im Addierer AD kann diesem über einen Multiplexer MUX3 eine entsprechende Größe zugeführt werden. Diese kann aus dem Mikrobefehlsregister MBR entnommen werden, oder durch ein Register RG1 eingestellt werden.

Die DMA Steuerung enthält weiterhin eine Datenstufe DU, in der der Pufferspeicher DAR enthalten ist. Die Datenstufe DU ist mit dem Datenbus DB verbunden, und zwar mit einem Zwischenspeicher PS2. Zwischen dem Zwischenspeicher PS2 und dem Eingang des Pufferspeichers DAR ist ein Eingangsregister EPS, zwischen dem Ausgang des Pufferspeichers DAR und dem Zwischenspeicher PS2 ein Ausgangsregister APS angeordnet. Der Pufferspeicher DAR ist weiterhin mit dem internen Bus IA für die Adressen und Steuersignale und einem internen Bus ID für die Daten verbunden. Weiterhin ist ein Schalter S1 in der Datenstufe DU angeordnet, mit dem die vom Mikroprozessor MC kommenden Adressen von der Adresseneinheit AU auf den internen Adreßbus IA durchgeschaltet werden können (zum Adressieren eines internen Registers).

Die Anzahl der zu übertragenden Bytes pro Datentransfer wird mit Hilfe eines Bytezählers BZ festgelegt, der an die internen Busse ID und IA angeschlossen ist.

Schließlich sind noch kontrollregister CR vorgesehen. Dazu gehören das Kanalstatusregister CSR, das Befehlsregister GCR und insbesondere das Kanalbefehlsregister CCR. Diese Steuerregister CR sind insbesondere mit dem Sequencer SE verbunden und zwar in der in Figur 2 angegebenen Weise.

Weitere Einheiten der DMA Steuerung sind zur Erläuterung des erfindungsgemäßen Verfahrens nicht erforderlich. Dazu gehören z. B. ein Taktgenerator TG und eine Anpassungschaltung ANS, die die Verbindung zum Mikroprozessor MC herstellt. Weiterhin kann eine Prioritätsschaltung PR vorgesehen sein, die bei Vorliegen von Bedienungsanforderungen von mehreren Datensendern oder Datenempfängern diejenige Einheit mit der höchsten Priorität auswählt. Mit Hilfe einer Schaltungsanordnung ITS zur Erzeugung einer Unterbrechungsanforderung IT kann dem Mikroprozessor MC mitgeteilt werden, wenn das Kanalprogramm von der DMA Steuerung beendet worden ist.

Im folgenden soll kurz erläutert werden, wie die DMA Steuerung arbeitet. Der Mikroprozessor MC lädt zunächst die Kanalprogramme in den Speicher MM, Außerdem lädt er das Adressenregister ADR mit der Adresse des ersten zu bearbeitenden Kanalbefehls im Kanalprogramm und das Befehlsregister GCR mit dem Startbefehl. Anschließend übernimmt die DMA Steuerung die weitere Abarbeitung des Kanalprogramms. Aus dem Befehlsregister GCR, das mit dem Sequencer SE verbunden ist, wird über den Befehlsdecoder MAP das zur Befehlseinleitung erforderliche Mikroprogramm im Mikroprogrammspeicher MPS adressiert. Mit Hilfe der zugeordneten Mikrobefehle, die in das Mikrobefehlsregister MBR übertragen werden, wird der erste Kanalbefehl in das Kanalbefehlsregister CCR übertragen. Daraus ergibt sich, ob der Kanalbefehl ein Transferbefehl ist, wie er in Figur 3 dargestellt ist. Ist dies der Fall, dann stellt der Sequencer SE, der mit dem Kanalbefehlsregister CCR verbunden ist, fest, ob die Moduscodierung im Bestandteil DE bzw. SO des Kanalbefehlswortes CCW binär 11 ist oder nicht. Weiterhin veranlaßt der Sequencer SE durch Ansteuerung der entsprechenden Mikroprogramme im Mikroprogrammspeicher MPS, daß der Bytezähler BZ mit der Anzahl der zu übertragenden Bytes geladen wird, und daß in das Adressenregister ADR die Adresse des Datensenders bzw. die Adresse des Datenempfängers geladen wird. Die entsprechenden Adressen sind im Kanalbefehl (Figur 3) enthalten.

Stellt der Sequencer SE durch Auswertung des Kanalbefehls fest, daß z. B. ein Kanalbefehl entsprechend Figur 4 vorliegt, dann adressiert er das zugeordnete Mikroprogramm im Mikroprogrammspeicher MPS, durch das veranlaßt wird, daß der Inhalt SA des Kanalbefehls vom Pufferspeicher DAR über das Register APS und den Zwischenspeicher PS2 zum Datenbus DB übertragen wird. Aus dem Inhalt des Bytezählers BZ kann entnommen werden, ob dieser Vorgang einmal oder mehrmals durchgeführt werden muß.

Stellt dagegen der Sequencer SE fest, daß im Kanalbefehlswort CCW der Modusteil des Befehlsteils DE binär 11 ist, dann adressiert er das Mikroprogramm im Mikroprogrammspeicher MPS, das die Datenübertragung vom Datensender zum Pufferspeicher DAR veranlaßt, dagegen die weitere Übertragung zum Datenempfänger unterdrückt. Auch hier kann die Übertragung mehrmals erfolgen, gemäß dem Inhalt des Bytezählers BZ. Zum Abschluß der Datenübertragung wird das Kanalstatusregister CSR entsprechend der Abschlußursache gesetzt und der Inhalt des Kanalstatusregisters CSR in den Speicher MM und zwar in den Bestandteil CSW des Kanalbefehls übertragen.

Die Arbeitsweise des Sequencers SE kann der oben angegebenen Literaturstelle entnommen werden. Die Startadresse des Mikroprogramms im Mikroprogrammspeicher MPS wird jeweils durch den Befehlsdecoder MAP aus dem Kanalbefehl im Kanalbefehlsregister CCR oder aus dem Startbefehl im Befehlsregister GCR entnommen. Die weiteren Adressen der Mikrobefehle werden mit Hilfe des Addierers DR ermittelt oder aus dem vorhergehenden Mikrobefehl über das Mikrobefehlsregister MBR gewonnen. Wenn der Bytezähler BZ auf 0 herabgezählt hat, dann wird der Sequencer SE, der mit dem Bytezähler BZ verbunden ist, informiert und der Sequencer SE beendet die Bearbeitung des dem Kanalbefehl im Kanalbefehlsregister CCR zugeordneten Mikroprogramms.

**Patentansprüche**

1. Verfahren zum Steuern des Datentransfers zwischen einem Datensender und einem Datenempfänger über einen Bus mit Hilfe einer am Bus angeschlossenen Steuereinrichtung, die in Abhängigkeit eines Transferbefehle und Steuerbefehle enthaltenden Kanalprogramms den Datentransfer zwischen dem Datensender und dem Datenempfänger derart steuert, daß veranlaßt durch einen in einem Kanalbefehl enthaltenen Transferbefehl in einem ersten Zyklus die Daten in einen Pufferspeicher der Steuereinrichtung und in einem zweiten Zyklus aus dem Pufferspeicher zum Datenempfänger übertragen werden und bei dem der zugeordnete Transferbefehl jeweils eine Moduscodierung für die Behandlung der Datensenderadresse und der Datenempfängeradresse enthält, dadurch gekennzeichnet, daß zur Realisierung eines ausschließlichen Datentransfers vom Datensender zur Steuereinrichtung (DMA) der Transferbefehl (CCW) eine derartige Moduscodierung (Modus) für die Datenempfängeradresse (DE) enthält, daß die Steuereinrichtung nur die Datenübertragung zwischen dem Datensender und dem Pufferspeicher (DAR) der Steuereinrichtung veranlaßt und/oder daß zur Realisierung eines ausschließlichen Datentransfers von der Steuereinrichtung (DMA) zum Datenempfänger der Transferbefehl (CCW) eine derartige Moduscodierung (Modus) für die Datensenderadresse (SO) enthält, daß die Steuereinrichtung nur die Datenübertragung zwischen dem Pufferspeicher (DAR) der Steuereinrichtung und dem Datenempfänger veranlaßt.

2. Verfahren nach Anspruch 1, dadurch gekennzeichnet, daß bei einem den Transferbefehl, die Datensenderadresse, die Datenempfängeradresse und die Anzahl der zu übertragenden Daten enthaltenden Kanalbefehl die Datensenderadresse (SA) durch das zu übertragende Datum ersetzt ist.

3. Verfahren nach Anspruch 1, dadurch gekennzeichnet, daß bei einem den Transferbefehl, die Datensenderadresse, die Datenempfängeradresse und die Anzahl der zu übertragenden DAten enthaltenden Kanalbefehl die Datenempfängeradresse (DA) von der Steuereinrichtung unterdrückt wird.

4. Steuereinrichtung zur Durchführung des Verfahrens nach Anspruch 1 oder 3, dadurch gekennzeichnet, daß eine DMA-Steuerung vorgesehen ist, die einen durch einen Sequencer (SE) adressierten Mikroprogrammspeicher (MPS) zur Aufnahme der den Kanalbefehlen zugeordneten Mikroprogramme, eine Adresseneinheit (AU) zur Aufnahme der Datenempfänger- und Datensenderadressen sowie der Kanalbefehlsadresse, eine Datenstufe (DU) mit dem Pufferspeicher (DAR), eine Steuerregisterstufe (CR) und einen Bytezähler (BZ) enthält, daß der Kanalbefehl mit der zugehörigen Moduscodierung (Modus) in ein in der Steuerregisterstufe enthaltenes Kanalbefehlsregister (CCR) eingespeichert wird, daß der mit dem Kanalbefehlsregister (CCR) verbundene Sequencer (SE) das dem Kanalbefehl zugeordnete Mikroprogramm im Mikroprogrammspeicher (MPS) adressiert, der die zugeordneten Mikrobefehle abgibt und daß die Adresseneinheit (AU) bei entsprechender Moduscodierung die Adresse des zu übertragenden Datums im Datensender über den Bus (BU) zum Datensender schickt, der das Datum in den Pufferspeicher (DAR) in der Datenstufe (DU) überträgt.

5. Steuereinrichtung zur Durchführung des Verfahrens nach Anspruch 1 oder 2, dadurch gekennzeichnet, daß eine DMA-Steuerung vorgesehen ist, die einen durch einen Sequencer (SE) adressierten Mikroprogrammspeicher (MPS) zur Aufnahme der den Kanalbefehlen zugeordneten Mikroprogramme, eine Adresseneinheit (AU) zur Aufnahme der Datenempfänger- und Datensenderadressen, eine Datenstufe (DU) mit dem Pufferspeicher (DAR), eine Steuerregisterstufe (CR) und einen Bytezähler (BZ) enthält, daß der Kanalbefehl mit der zugehörigen Moduscodierung (Modus) in einem in der Steuerregisterstufe (CR) enthaltenen Kanalbefehlsregister (CCR) gespeichert ist, daß der mit dem Kanalbefehlsregister verbundene Sequencer (SE) das dem Kanalbefehl zugeordnete Mikroprogramm im Mikroprogrammspeicher (MPS) adressiert, der die zugeordneten Mikrobefehle abgibt und daß die Adresseneinheit (AU) bei entsprechender Moduscodierung die Adresse des Datenempfängers, zu dem das Datum übertragen werden soll über den Bus (BU) überträgt und das zugeordnete Datum aus dem Pufferspeicher (DAR) auf den Datenbus (DB) ausgibt.

**Claims**

1. Method for controlling the data transfer between a data transmitter and a data receiver on a bus using a control unit which is connected to the bus and which, in dependence on a channel program containing transfer commands and control commands, controls the data transfer between the data transmitter and the data receiver in such a manner that, enabled by a transfer command contained in a channel command, the data are transferred into a buffer store of the control unit in a first cycle and from the buffer store to the data receiver in a second cycle and in which the associated transfer command in each case contains a mode coding for the treatment of the data transmitter address and the data receiver address, characterized in that, for implementing an exclusive data transfer from the data transmitter to the control unit (DMA), the transfer command (CCW) contains such a mode coding (Modus) for the data receiver address (DE) that the control unit only enables the data transmission between the data transmitter and the buffer store (DAR) of the control unit and/or that, for implementing an exclusive data transfer from the control unit (DMA) to the data receiver, the transfer command (CCW) contains such a mode coding (Modus) for the data transmitter address (SO) that the control unit only enables the data transmission between the buffer store (DAR) of the control unit and the data receiver.

2. Method according to Claim 1, characterized in that in a channel command containing the transfer command, the data transmitter address, the data receiver address and the number of data items to be transmitted, the data transmitter address (SA) is replaced by the data item to be transmitted.

3. Method according to Claim 1, characterized in that in a channel command containing the transfer command, the data transmitter address, the data receiver address and the number of data items to be transmitted, the data receiver address (DA) is suppressed by the control unit.

4. Control unit for carrying out the method according to Claim 1 or 3, characterized in that a DMA control is provided which contains a microprogram store (MPS), which is addressed by a sequencer (SE), for accommodating the microprograms associated with the channel commands, an address unit (AU) for accommodating the data receiver and data transmitter addresses and the channel command address, a data unit (DU) with the buffer store (DAR), a control register stage (CR) and a byte counter (BZ), that the channel command with the associated mode coding (Modus) is stored in a channel command register (CCR) contained in the control register stage, that the sequencer (SE) connected to the channel command register (CCR) addresses the microprogram associated with the channel command in the microprogram store (MPS) which outputs the associated microcommands, and that the address unit (AU), with corresponding mode coding, sends the address of the data item to be transmitted in the data transmitter via the bus (BU) to the data transmitter which transfers the data item into the buffer store (DAR) in the data unit (DU).

5. Control unit for carrying out the method according to Claim 1 or 2, characterized in that a DMA control is provided which contains a microprogram store (MPS), which is addressed by a sequencer (SE), for accommodating the microprograms associated with the channel commands, an address unit (AU) for accommodating the data receiver and data transmitter addresses, a data unit (DU) with the buffer store (DAR), a control register stage (CR) and a byte counter (BZ), that the channel command with the associated mode coding (Modus) is stored in a channel command register (CCR) contained in the control register stage (CR), that the sequencer (SE) connected to the channel command register addresses the microprogram associated with the channel command in the microprogram store (MPS) which outputs the associated microcommands, and that the address unit (AU), with corresponding mode coding, transfers the address of the data receiver to which the data item is to transmitted via the bus (BU) and outputs the associated data item from the buffer store (DAR) to the data bus (DB).

**Revendications**

1. Procédé pour commander le transfert de données par un bus entre un émetteur de données et un récepteur de données, à l'aide d'un dispositif de commande raccordé au bus et qui commande le transfert de données entre l'émetteur et le récepteur en fonction d'un programme de canal contenant des instructions de transfert et des instructions de commande, de manière que sous l'impulsion d'une instruction de transfert, contenue dans une instruction de canal, les données soient transmises, dans un premier cycle, dans une mémoire tampon du dispositif de commande et, dans un second cycle, depuis cette mémoire tampon au récepteur de données, et dans lequel l'instruction de transfert coordonnée contient chaque fois un codage de mode pour le traitement de l'adresse de l'émetteur de données et de l'adresse du récepteur de données, caractérisé en ce que, pour réaliser un transfert de données uniquement depuis l'émetteur au dispositif de commande (DMA), l'instruction de transfert (CCW) contient un tel codage de mode (mode) pour l'adresse (DE) du récepteur de données que le dispositif de commande déclenche seulement la transmission de données entre l'émetteur et la mémoire tampon (DAR) du dispositif de commande et/ou que, pour réaliser un transfert de données uniquement depuis le dispositif de commande (DMA) au récepteur de données, l'instruction de transfert (CCW) contient un tel codage de mode (mode) pour l'adresse de l'émetteur de données que le dispositif de commande provoque seulement la transmission de données entre la mémoire tampon (DAR) du dispositif de commande et le récepteur de données.

2. Procédé selon la revendication 1, caractérisé en ce que, dans une instruction de canal contenant l'instruction de transfert, l'adresse de l'émetteur de données. l'adresse du récepteur de données et le nombre des données à transmettre, l'adresse (SA) de l'émetteur de données est remplacée par la donnée à transmettre.

3. Procédé selon la revendication 1, caractérisé en ce que, dans une instruction de canal contenant l'instruction de transfert. l'adresse de l'émetteur de données, l'adresse du récepteur de données et le nombre des données à transmettre, l'adresse (DA) du récepteur de données est supprimée par le dispositif de commande.

4. Dispositif de commande pour la mise en œuvre du procédé selon la revendication 1 ou 3, caractérisé en ce qu'une commande (DMA) est prévue, qui contient une mémoire de microprogrammes (MPS) adressée par un séquenceur (SE) et servant à la réception de microprogrammes coordonnés aux instructions de canal, une unité d'adresses (AU) pour recevoir les adresses du récepteur et de l'émetteur de données, ainsi que l'adresse de l'instruction de canal, un étage de données (DU), comportant la mémoire tampon (DAR), un étage à registre de commande (CR) et un compteur de bytes (BZ), que l'instruction de canal, avec le codage de mode (mode) correspondant est mémorisé dans un registre d'instructions de canal (CCR) contenu dans l'étage à registre de commande, que le séquenceur (SE), relié au registre d'instructions de canal (CCR), adresse, dans la mémoire de microprogrammes (MPS), le microprogramme coordonné à l'instruction de canal et qui délivre les microinstructions coordonnées et que l'unité d'adresses (AU), au cas où le codage de mode est réalisé en conséquence, envoie l'adresse de la donnée à transmettre, contenue dans l'émetteur de données, à travers le bus (BU) à cet émetteur, lequel transmet la donnée dans la mémoire tampon (DAR) de l'étage de données (DU).

5. Dispositif de commande pour la mise en œuvre du procédé selon la revendication 1 ou 2, caractérisé en ce qu'une commande (DMA) est prévue, qui contient une mémoire de microprogrammes (MPS), adressée par un séquenceur (SE) et servant à recevoir les microprogrammes coordonnés aux instructions de canal, une unité d'adresses (AU) pour recevoir les adresses du récepteur et de l'émetteur de données, un étage de données (DU), comportant la mémoire tampon (DAR), un étage à registre de commande (CR) et un compteur de bytes (BZ), que l'instruction de canal, avec le codage de mode (mode) correspondant, est mémorisée dans un registre d'instructions de canal (CCR) contenu dans l'étage à registre de commande (CR), que le séquenceur (SE), relié au registre d'instructions de canal, adresse, dans la mémoire de microprogrammes (MPS), le microprogramme coordonné à l'instruction de canal et qui délivre les microinstructions coordonnées et que l'unité d'adresses (AU), au cas où le codage de mode est réalisé en conséquence, transmet, par le bus (BU), l'adresse du récepteur de données auquel la donnée doit être transmise, et délivre, sur le bus de données (DB), la donnée correspondante à partir de la mémoire tampon (DAR).

# FIG 1

FIG 2

EP 0 108 417 B1

## FIG 3

## FIG 4